**Europäisches Patentamt**

**European Patent Office**

**Office européen des brevets**

(19)

(11) Veröffentlichungsnummer : **0 245 196 B1**

# EUROPÄISCHE PATENTSCHRIFT

(12)

(45) Veröffentlichungstag der Patentschrift :
26.06.91 Patentblatt 91/26

(51) Int. Cl.$^5$ : **H04B 5/00, H04L 27/22**

(21) Anmeldenummer : **87730045.9**

(22) Anmeldetag : **27.04.87**

(54) **Verfahren zur Datenübertragung zwischen einem festen Teil und einem beweglichen Teil.**

(30) Priorität : **29.04.86 DE 3614477**

(43) Veröffentlichungstag der Anmeldung :
**11.11.87 Patentblatt 87/46**

(45) Bekanntmachung des Hinweises auf die
Patenterteilung :
**26.06.91 Patentblatt 91/26**

(84) Benannte Vertragsstaaten :
**AT CH FR GB IT LI NL SE**

(56) Entgegenhaltungen :
**DE-A- 2 658 499**

(56) Entgegenhaltungen :
**IEEE TRANSACTIONS ON COMMUNICA-
TIONS, Band COM-21, Nr. 12, Dezember 1973,
Seiten 1352-1360, V.O. HENTINEN et al.: "A
digital demodulator for PSK signals"**

(73) Patentinhaber : **Angewandte Digital Elektronik
GmbH
Bundesstrasse 25
W-2051 Brunstorf (DE)**

(72) Erfinder : **Mackenthun, Holger
Eilswiese 6
W-2000 Hamburg 65 (DE)**
Erfinder : **Kreft, Hans-Diedrich
Birkenau 5
W-2055 Dassendorf (DE)**

EP 0 245 196 B1

Jouve, 18, rue Saint-Denis, 75001 PARIS

## Beschreibung

Es besteht das Problem, im Bereich miniaturisierter Schaltungsträger, wie Schlüssel und Chipkarte (Scheckkarte), Signale von einer Schaltung eines ersten Teiles zu einer Schaltung eines zweiten Teiles und umgekehrt zu übertragen, wobei das erste Teil das zweite Teil auch während der Signalübertragung mit Energie versorgt und sowohl zur bidirektionalen Signalübertragung sowie zur Energieversorgung nur eine Spule, jeweils auf dem ersten Teil und eine Spule auf dem zweiten Teil, benutzt wird.

Das Problem der monodirektionalen Signalübertragung ist durch Verwendung und Einsatz von Schaltungen nach dem Prinzip des Synchronschalters gelöst. Hierbei werden vorwiegend von einem beweglichen Teil, wie Schlüssel oder Chipkarte, zu bestimmten Zeitpunkten, welche durch Zählung von Schwingungshalbwellen markiert werden, Signale per Kurzschluß einer Spule übertragen. Solche Systeme finden bereits Anwendung im Schloß- und Schlüsselbereich.

Der Erfindung liegt nun die Aufgabe zugrunde diese Systeme derart zu ergänzen, daß Signale vom vorwiegend stationären Teil zum beweglichen Teil (z.B. vom Schloß zum Schlüssel) nach dem Prinzip des Phasensprunges übertragen werden können, ohne daß eine zusätzliche Spule zum Einsatz kommt und auch der geometrische, äußere Aufbau der Übertragungsbauteile gleich bleibt und bestehende Empfangselektroniken nach dem Prinzip des Synchronschalters weiterhin, auch bei dem Einsatz der hier beschriebenen Erfindung, voll funktionsfähig bleiben und Signale vom vorwiegend beweglichen Elektronikteil erhalten können.

Gelöst wird diese Aufgabe mit den Merkmalen im Kennzeichen des Patentanspruches.

Neben der Integration des Synchronschalterprinzipes war es erforderlich, eine solche Auswertung eines Phasensprunges zu finden, welche per Schaltung problemlos miniaturisierbar ist und somit als IC auf einem beweglichen Träger, wie einem Schlüssel oder einer Chipkarte, unterzubringen ist. Größere Bauteile, wie Spulen oder Kondensatoren oder Widerstände, welche im Bereich digitaler Schaltungen nur schwer realisierbar sind, sollten möglichst für die Schaltung nicht benötigt werden. Auch sollte die Schaltung gegenüber Umwelteinflüssen äußerst stabil sein.

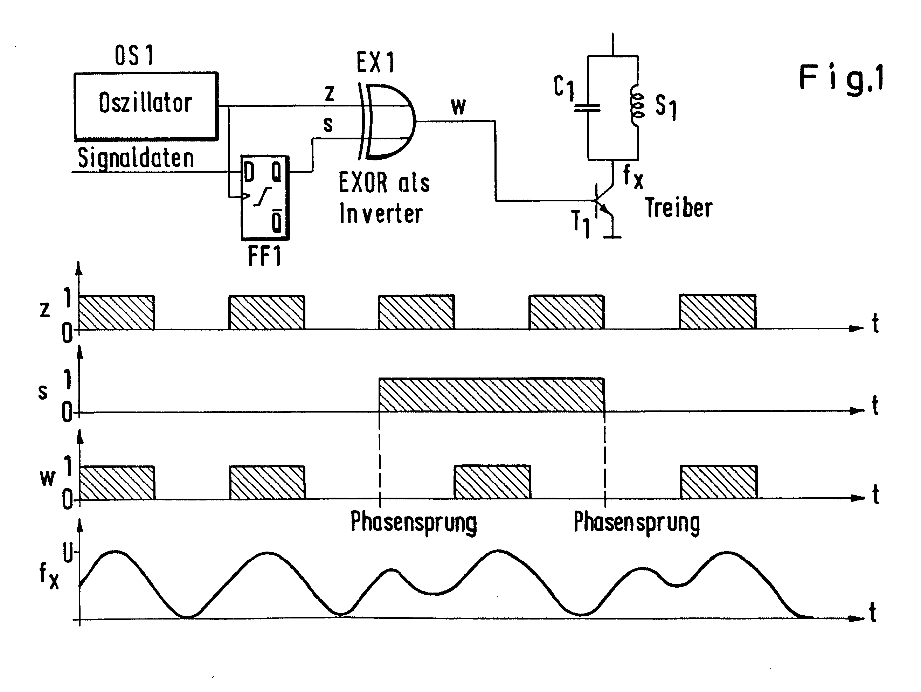

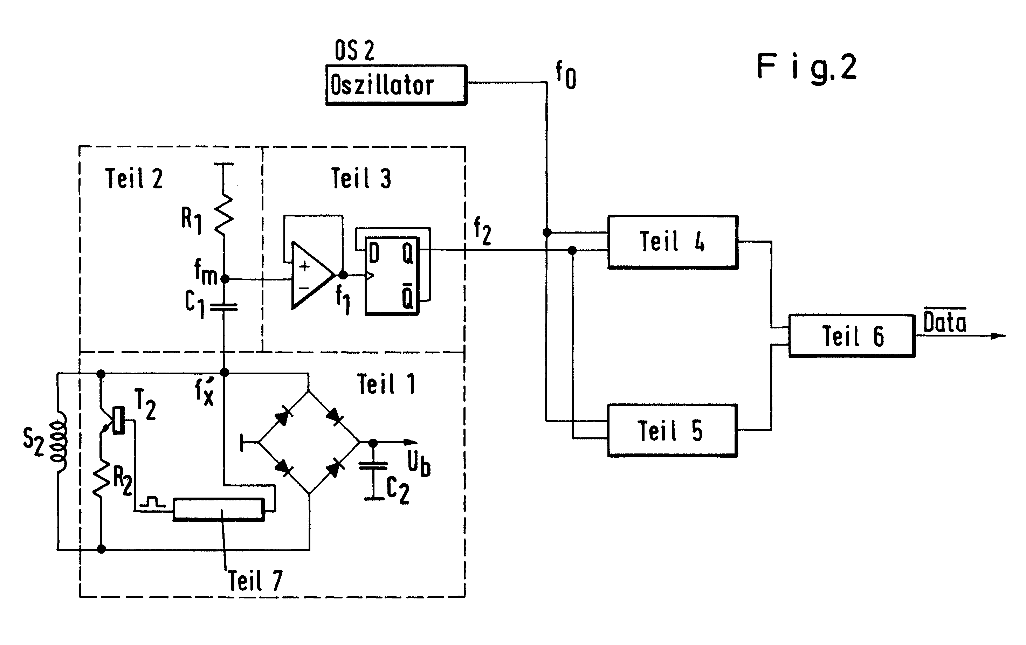

In figur 1 ist Erzeugung eines Phasensprunges per EXOR Glied (EX1) dargestellt. Die Signaldaten werden vom Flipflop (FF1) mit dem Text des Oszillators (OS1) synchronisiert. Mit dem Ausgang vom EX1 ist die Basis des Transistors T1 verbunden. T1 zwingt dem Schwingkreis, bestehend aus Kondensator C1 und Spule S1, die vom Oszillator OS1 vorgegebene Frequenz auf. Über die Spule S1 besteht eine induktive Kopplung zur Spule S2 in Fig. 2. Aus dieser Anordnung von Fig. 1 ist ersichtlich, daß eine Zustandsänderung der Signaldatenleitung (S) eine Phasenverschiebung von 180° der Schwingung fx zur Folge hat, die über S1 auf S2 übertragen wird. In der DE-PS 31 49 789 ist dies Prinzip, ohne die Phasenverschiebung, bereits beschrieben.

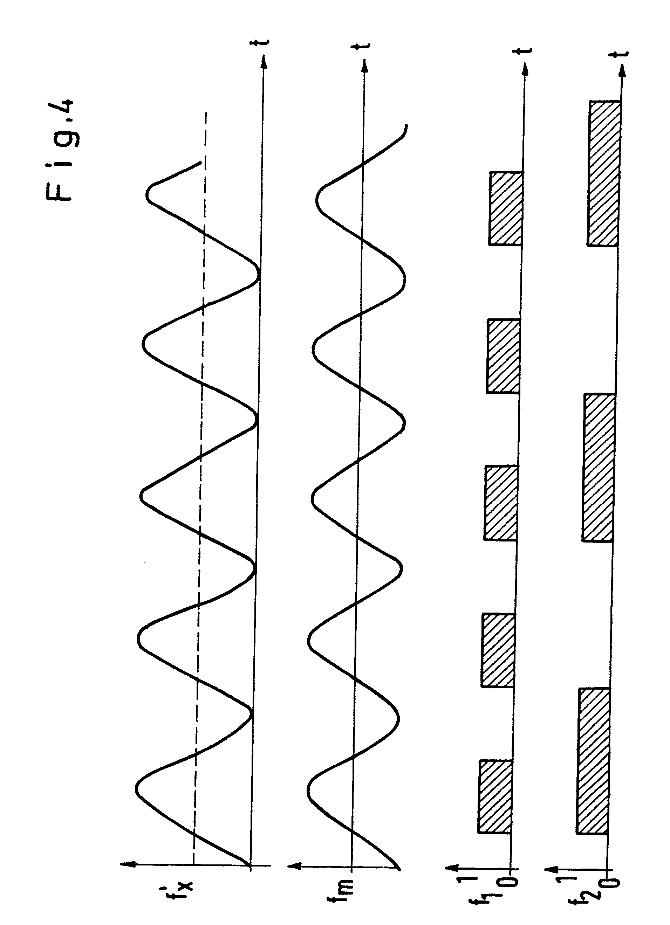

Fig. 2 zeigt das Blockschaltbild des vorwiegend beweglichen Teiles zur Erkennung des Phasensprunges und Details der Teile 1, 2 und 3. Die benötigte Betriebsspannung des vorwiegend beweglichen Teiles wird aus dem Gleichspannungsteil der von S1 nach S2 übertragenen Schwingung fx' im stationären Teil 1 gewonnen. Ferner wird z.B. über den Transistor T2 und den Widerstand R2 die Spule S2 über ein Schaltungsteil 7 zu Zeitpunkten kurzgeschlossen, welche durch Zählung von Halbwellen der Frequenz fx bestimmt ist. Im beweglichen Teil 2 wird der Wechselspannungsteil (Fig. 4, Diagramm fm) der Schwingung fx' ausgefiltert.

Schaltungsteil 3 bildet aus dem in Teil 2 ausgefilterten Wechselspannungsteil Rechteck-Impulse, und zwar so, daß, wenn kein Phasensprung vorliegt, die High-Signale ebenso lang sind wie die Low-Signale (Fig. 4, Diagramm f2). Schaltungsteil 5 zählt die positiven Flanken der fest schwingenden Frequenz fo während das Low-Signal von f2 anliegt. Schaltungsteil 4 zählt die positiven Flanken der fest schwingenden Frequenz fo während das High-Signal von f2 anliegt. Die fest schwingende Frequenz fo wird durch den Oszillator OS2 auf dem vorwiegend beweglichen Teil erzeugt, dessen Frequenz höher ist als die des Oszillators OS1 auf dem vorwiegend stationären Teil.

Schaltungsteil 6 subtrahiert die Anzahl der von den Schaltungsteilen 4 und 5 gezählten positiven Flanken voneinander. Aus der Differenz dieser Zahlen kann auf einen Phasensprung auf seiten des stationären Teiles geschlossen werden, womit der Ausgang $\overline{DATA}$ von Schaltungsteil 6 auf High gesetzt werden kann.

Schaltungsteil 3 besteht aus einem übersteuerten Operationsverstärker und einem Flipflop. Der Operationsverstärker wandelt die sinusähnliche Wechselspannung in Rechteck-Impulse um, so daß die Dauer der positiven Halbwellen der Dauer des High-Signales, die Dauer der negativen Halbwelle der Dauer des Low-Signales entspricht. Sollten jedoch, wenn kein Phasensprung vorliegt, die positive und die negative Halbwelle des Wechselspannungsteiles verschieden lang sein, würde die Schaltung zur Erkennung des Phasensprunges fälschlicherweise einen Phasensprung erkennen, wie aus obiger Beschreibung deutlich wird.

Um dies zu verhindern, wird dem Operationsverstärker ein Flipflop nachgeschaltet, so daß eine Periodendauer der Schwingung fm der Dauer des High bzw. Low-Signales entspricht.

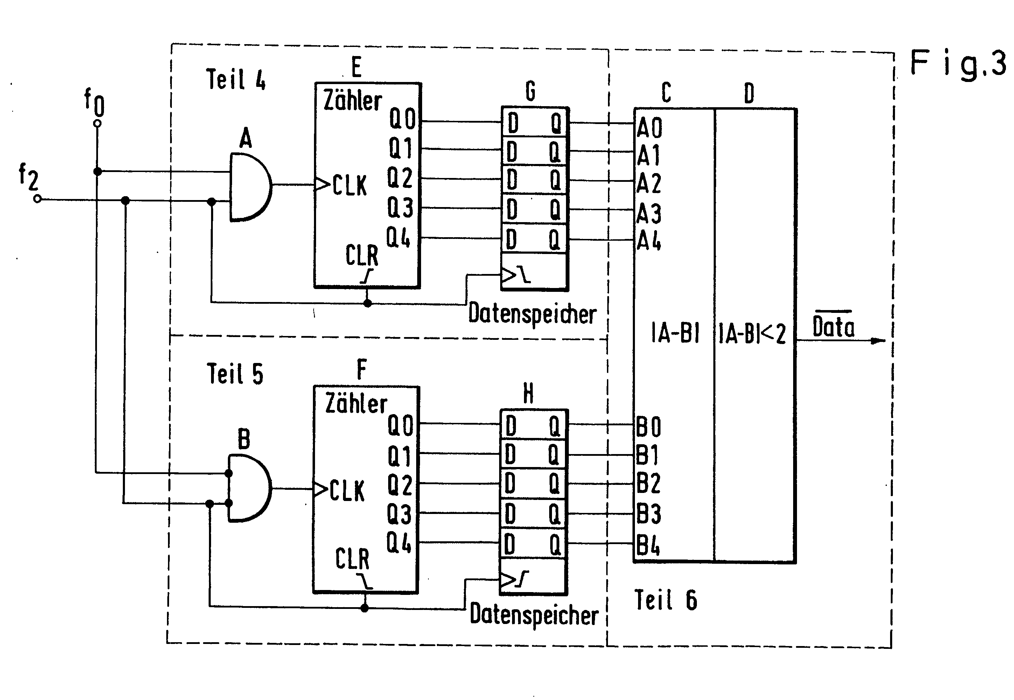

Figur 3 zeigt eine möglich Ausgestaltung der Schaltungsteile 4, 5, 6. Die And- Gatter A und B bestimmen, wann die dahinter folgende Zählschaltung aktiviert wird. Bauelement C bildet den Betrag der Differenz der Inhalte des Datenspeichers G und H.

Bauelement D legt seinen Ausgang auf High, wenn der Betrag der Differenz größer als 1 ist.

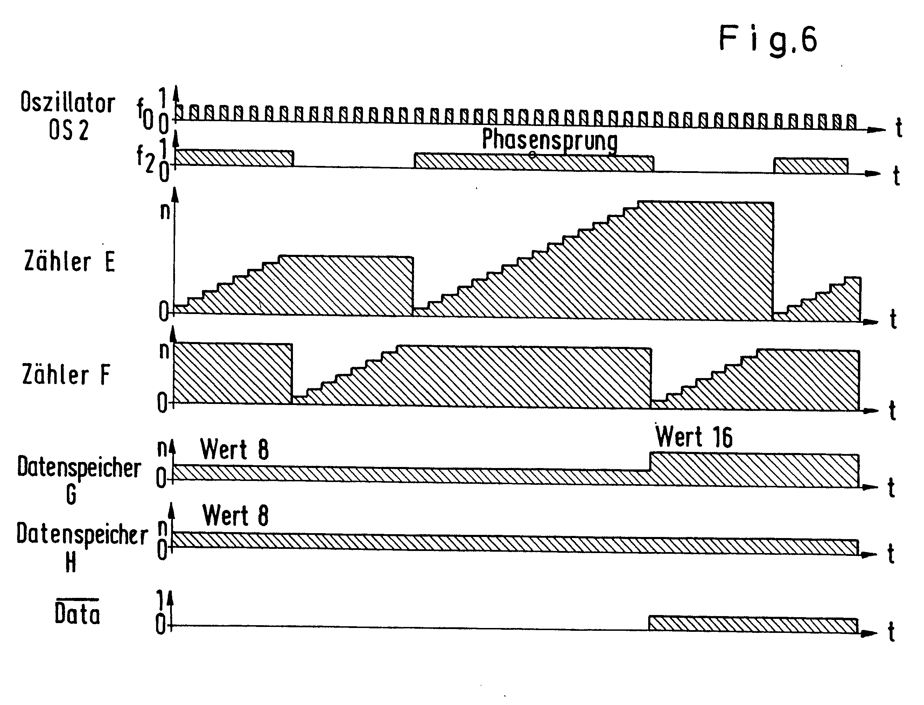

Die weitere Funktionsweise verdeutlichen die Diagramme von Figur 6.

Figur 4 zeigt für den Fall, daß kein Phasensprung vorliegt, wie aus dem Welchselspannungsanteil der Schwingung fx' Rechteckimpulse zur digitalen Weiterverarbeitung werden anhand von zu Fig. 2 gehörigen Diagrammen.

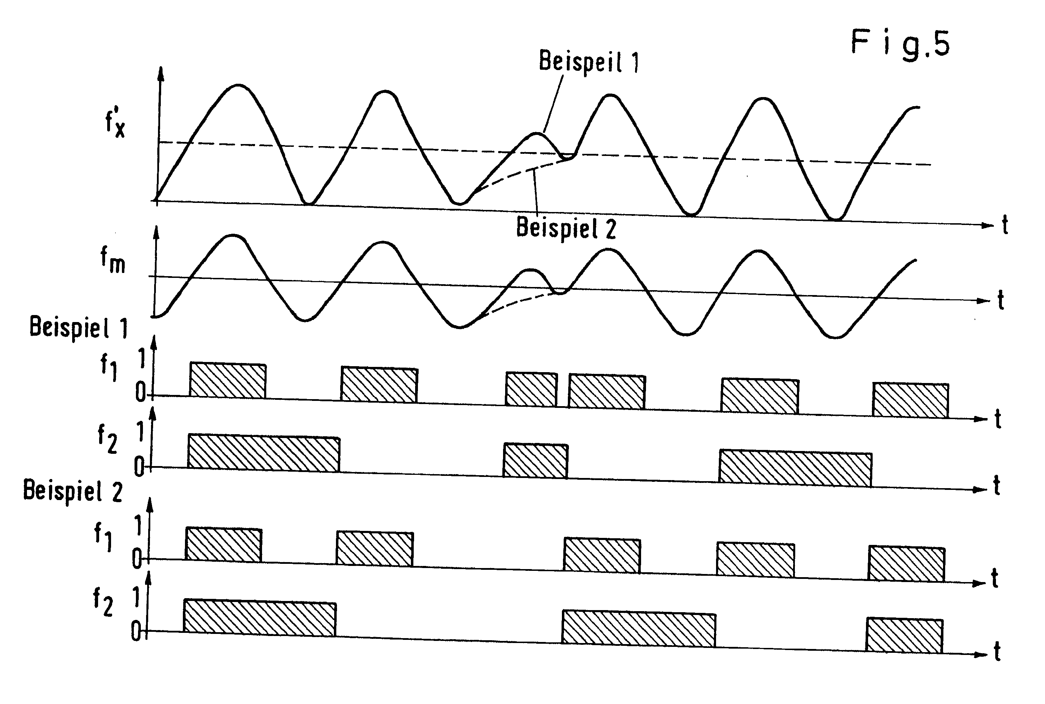

Figur 5 zeigt für den Fall, daß ein Phasensprung vorliegt, wie aus dem Wechselspannungsanteil der Schwingung fx' Rechteckimpulse zur digitalen Weiterverarbeitung werden anhand von zu Fig. 2 gehörigen Diagrammen. Fig. 5 macht deutlich, daß es unerheblich ist, wie sich die Schwingung beim Phasensprung verhält, da sich aufgrund der Phasenverschiebung um 180° eine unterschiedliche Dauer von High- zu Low-Signalen ergeben muß.

In Fig. 6 sind die zu Fig. 3 gehörigen Diagramme dargestellt. Liegt von f2 ein High-Signal an, so zählt der Zähler E jede positive Flanke der Frequenz des Oszillators OS2. Wechselt nun mit f2 das Signal von High auf Low, so übernimmt der Datenspeicher G mit der negativen Flanke die von E gezählten positiven Flanken und der Zähler F wird zurückgesetzt. Im Datenspeicher H ist noch die Anzahl der gezählten positiven Flanken während des vorherigen Low-Signales gespeichert. Da die Differenz der Inhalte der Datenspeicher H und G kleiner als 2 ist, ist der Ausgang von Teil 6 auf $\overline{DATA}$ = Low gesetzt. Der Zähler F zählt nun die Anzahl der positiven Flanken während des Low-Signales.

Wechselt f2 von Low auf High, übernimmt der Datenspeicher H mit der positiven Flanke die gezählten positiven Flanken während des Low-Signales und der Zähler E wird zurückgesetzt. Nun zählt der Zähler E wieder die positiven Flanken während des High Signales.

Ändert sich das Verhältnis der Zeit von Signalzustand High zu Signalzustand Low von f2, ändert sich auch die Zahl der gezählten positiven Flanken von fo, welche in den Datenspeichern G und H gespeichert sind. Der Komparator (Schaltungsteil G) vergleicht die in G und H gespeicherten Zahlen und gibt das Signal $\overline{DATA}$ (gemäß Fig. 3 und Fig. 6) ab.

Gemäß Figur 5 und obiger Beschreibung tritt ein solcher Zeitunterschied zwischen Siganlzustand High von f2 und Signal-Zustand Low von f2 mit der Erzeugung eines Phasensprunges auf, der somit eindeutig durch das Signal $\overline{DATA}$ indiziert wird.

Wie aus dieser Beschreibung ersichtlich wird, erfüllt die Schaltung die eingangs aufgestellten Forderungen. Der Schaltungsmehraufwand beii Schaltungen, die nach dem Prinzip des Synchronschalters arbeiten, ist begrenzt und fast auschließlich digital und somit problemlos miniaturisierbar.

## Ansprüche

1. Verfahren zur bidirektionalen Datenübertragung zwischen einem vorwiegend stationären Teil (1) und einem vorwiegend beweglichen Teil (2), wobei das stationäre Teil (1) einen Oszillator (OS1) enthält, und dem beweglichen Teil (2) während der Gesamtzeit der Datenübertragung Leistung nach dem Transformatorprinzip überträgt, und das bewegliche Teil sowie das stationäre Teil jeweils nur eine Spule ($S_1$, $S_2$) aufweisen, und ferner das bewegliche Teil Signale zum stationären Teil nach dem Prinzip des Synchronschalters überträgt, **dadurch gekennzeichnet,** daß auf dem beweglichen Teil (2) aus der vom stationären Teil (1) übertragenen Schwingung, der zu bestimmten Zeitpunkten vom stationären Teil Phasensprünge aufgezwungen werden können, Rechteckimpulse erzeugt werden, deren zeitliches Verhältnis der Dauer von High-Zustand zu Low-Zustand konstant ist, indem der Frequenzanteil der übertragenen Schwingung über einen Kondensator (C1) vom Gleichspannungsanteil getrennt wird, wobei ein Gleichspannungsteil aus der übertragenen Schwingung zur Versorgung der Schaltung des beweglichen Teiles (2) gewonnen wird und indem die derart gewonnene Frequenz einem übersteuerten Operationsverstärker mit nachgescaltetem Flip-Flop zugefürt wird und daß die derart erzeugten Rechteckimpulse konstante Zeitverhältnisse zwischen High- und Low-Zuständen haben, sofern der vom stationären Teil übertragenen Schwingung keine Phasensprünge aufgezwungen wurden, wobei auch ein Oszillator (OS2) auf em beweglichen Teil (2) enthalten ist, welcher ein Schingung mit einer wesentlich höheren Frequenz als der Oszillator (OS1) vom stationären Teil (1) erzeugt und daß ferner die High-Zeiten der Rechteckimpulse, welche aus der übertragenen Frequenz des Oszillators (OS1) vom stationären Teil (1) gewonnen wurden, mit den Low-zeiten dieser Rechteckimpulse verglichen werden, indem die Frequenz des Oszillators (OS2) des beweglichen Teiles (2) laufend während der High- und Low-Zeiten der aus der übertragenen Frequenz des Oszillators (OS1)vom stationären Teil (1) gewonnenen Rechteckimpulse gezählt werden und die Zählung der Frequenzdurchgänge einer High-zeit zu einer unmittelbar folgeden Low-Zeit der Rechteckimpulse oder die Zählung der Frequenzdurchgänge der Low-Zeit zu einer unmittelbar Folgenden High-Zeit zu Unterschieden in der Zahl der Zählung führen, wenn infolge eines Phasensprunges in der Schwindung des stationären Teiles (1) die High- zu den Low-Zeiten der auf dem beweglichen Teil (2) gewonnenen Recht-

teckimpulse ihre Zeitanteile ändern, womit in einem digitalen Vergleich der Zählwerte bei Abweichung der auf dem stationären Teil (1) erzeugte Phasensprung vom beweglichen Teil (2) nachgewiesen wird.

## Claims

1. Process for bidirectional data transmission between a primarily stationary part (1) and a primarily movable part (2), the stationary part (1) comprising an oscillator (OS1) and transmitting power, according to the transformer principle, to the movable part (2) during the total duration of the data transmission, and both the movable part and the stationary part each having only one coil ($S_1$, $S_2$), and the movable part transmitting, moreover, signals to the stationary part according to the principle of the synchronous switch, characterised in that, on the movable part (2), rectangular pulses are produced from the oscillation which is transmitted by the stationary part (1) and onto which phase jumps may be imposed at certain times by the stationary part, the time ratio between the duration of the high state and the low state of the rectangular pulses being constant, the frequency part of the oscillation transmitted being separated from the d.c. part via a capacitor (C1), a d.c. part being obtained from the transmitted oscillation in order to supply the circuit of the movable part (2), and the frequency thus obtained being supplied to an overdriven operational amplifier with a flip-flop coupled to it, and in that the rectangular pulses thus produced have constant time ratios between the high and low states, provided that no phase jumps are imposed on the oscillation transmitted by the stationary part, the movable part (2) also comprising an oscillator (OS2) which produces an oscillation with a frequency significantly higher than the oscillator (OS1) of the stationary part, and in that further the high times of the rectangular pulses obtained from the frequency transmitted by the oscillator (OS1) of the stationary part (1) are compared with the low times of said rectangular pulses by continuously counting the frequency of the oscillator (OS2) of the movable part (2) during the high and low times of the rectangular pulses obtained from the frequency transmitted by the oscillator (OS1) of the stationary part (1), and the count of the frequency transitions of a high time, compared to a directly following low time, of the rectangular pulses, or the count of the frequency transitions of the low time, compared to a directly following high time, produce differences in the number of the count, if, as a result of a phase jump in the oscillation of the stationary part (1), the high to the low times of the rectangular pulses obtained on the movable part (2), change their time portions, whereby, if in a digital comparison of the count values said values differ, the phase jump on the stationary part (1) is detected by the movable part (2).

## Revendications

1. Procédé de transmission bidirectionnelle de données entre une partie (1) essentiellement fixe et une partie (2) essentiellement mobile, et selon lequel la partie (6) contient un oscillateur (OS1) et envoie à la partie mobile (2) une énergie sur la base du principe du transformateur, pendant la durée totale de la transmission de données, et la partie mobile ainsi que la partie fixe possèdent chacune une seule bobine ($S_1$, $S_2$), et en outre la partie mobile transmet des signaux selon le principe du commutateur synchrone, caractérisé par le fait que des impulsions rectangulaires sont produites dans la partie mobile (2) à partir de l'oscillation, qui est transmise par la partie fixe (1) et à laquelle la partie fixe peut appliquer des sauts de phase à des instants déterminés, impulsions pour lesquelles le rapport de la durée de l'état à niveau haut à la durée de l'état à niveau bas est constant, par le fait que la composante de fréquence de l'oscillation transmise est séparée de la composante de tension continue, par l'intermédiaire d'un condensateur (C1), une partie à tension continue étant obtenue à partir de l'oscillation transmise pour alimenter le circuit de la partie mobile (2), et par le fait que la fréquence obtenue de cette manière est envoyée à un amplificateur opérationnel à commande prioritaire, en aval duquel est branchée une bascule bistable, et que des impulsions rectangulaires produites de cette manière possèdent des rapports constants entre la durée de l'état à niveau haut et de la durée de l'état à niveau bas, dans la mesure où aucun saut de phase n'a été appliqué à l'oscillation transmise par la partie fixe, la partie mobile (2) contenant également un oscillateur (OS2) qui produit une oscillation ayant une fréquence nettement supérieure à celle de l'oscillateur (OS1) de la partie fixe (1), et qu'en outre les durées à niveau haut des impulsions rectangulaires, qui ont été obtenues par la partie fixe (1) à partir de la fréquence transmise de l'oscillateur (OS1), sont comparées aux durées à niveau bas de ces impulsions rectangulaires par le fait que la fréquence de l'oscillateur (OS2) de la partie mobile (2) est comptée en permanence pendant les durées à niveau haut et à niveau bas des impulsions rectangulaires obtenues à partir de la fréquence transmise de l'oscillateur (OS1), par la partie fixe (1), et le comptage des passages de la fréquence d'une durée à niveau haut à une durée à niveau bas immédiatement suivante des impulsions rectangulaires ou le comptage des passages de la fréquence de la durée à niveau à une durée à niveau haut immédiatement suivante conduit à des différences dans les nombres comptés lorsqu'en raison d'un saut de phase dans l'oscillation de la partie fixe (1), les rapports des durées à niveau haut aux durées à niveau bas des impulsions rectangulaires obtenues dans la partie mobile (2) marient, ce qui permet à la partie mobile (1) de déceler, lors d'une comparaison numérique des valeurs chiffrées, un écart dû au saut de phase produit dans la partie fixe (1).

Fig.1

OS1 Oszillator / Signaldaten

FF1 D Q / Q̄

EX1 EXOR als Inverter

z, s, w

C1, S1, fx, T1, Treiber

z: 1 0 — t

s: 1 0 — t

w: 1 0 — t

Phasensprung    Phasensprung

fx: U — t

EP 0 245 196 B1

Fig.2

Fig.3

Teil 4

E
Zähler
Q0
Q1
Q2
Q3
Q4
CLK
CLR

A

f0

f2

G
D Q
D Q
D Q
D Q
D Q

Datenspeicher

C
A0
A1
A2
A3
A4

D

IA-BI   IA-BI<2

$\overline{\text{Data}}$

Teil 5

F
Zähler
Q0
Q1
Q2
Q3
Q4
CLK
CLR

B

H
D Q
D Q
D Q
D Q
D Q

Datenspeicher

B0
B1
B2
B3
B4

Teil 6

EP 0 245 196 B1

F i g . 4

Fig.5

Fig.6

Oszillator OS 2

$f_0$

$f_2$

Phasensprung

Zähler E

n

Zähler F

n

Datenspeicher G

n    Wert 8                                         Wert 16

Datenspeicher H

n    Wert 8

$\overline{Data}$

EP 0 245 196 B1

11